# EUROPEAN PATENT SPECIFICATION

(11) **EP 4 438 763 B1**
(45) Date of publication and mention of the grant of the patent: **12.08.2026**
(21) Application number: 23746172.8
(22) Date of filing: 18.01.2023
(51) Int. Cl.: C22C 38/58, C21D 8/0221, C22C 38/00, C22C 38/02, C21D 8/10, C22C 38/04, C21D 1/26, C21D 9/46, C21D 9/08, B32B 15/01, B21B 1/38, C22C 38/44, C22C 38/42, C22C 38/28, C22C 38/26, C22C 38/14, C22C 38/12, C22C 38/08, C21D 1/02

(54) **A HIGH-STRENGTH TUBE RESISTANT TO ALUMINUM SULFATE CORROSION AND MANUFACTURING METHOD THEREFOR**
HOCHFESTES STAHKROHR MIT BESTÄNDIGKEIT GEGEN ALUMINIUMSULFATKORROSION UND HERSTELLUNGSVERFAHREN DAFÜR
TUBE À HAUTE RÉSISTANCE RÉSISTANT À LA CORROSION DE SULFATE D'ALUMINIUM ET SON PROCÉDÉ DE FABRICATION

(30) Priority: 26.01.2022 CN 202210093002
(43) Date of publication of application: 02.10.2024
(73) Proprietor: BAOSHAN IRON & STEEL CO., LTD., Shanghai 201900 (CN)
(72) Inventor: YAN, Bo, Shanghai 201900 (CN); JIAO, Sihai, Shanghai 201900 (CN); WANG, Zhiyu, Shanghai 201900 (CN); LI, Zhanjie, Shanghai 201900 (CN)
(74) Representative: Maiwald GmbH
(86) International application number: PCT/CN2023/072827
(87) International publication number: WO 2023/143290

(56) References cited:
- EP-A1- 3 862 456
- EP-B1- 3 511 082
- CN-A- 108 116 006
- CN-A- 109 108 071
- CN-A- 112 874 059
- CN-A- 112 877 589
- CN-A- 113 106 327
- JP-A- 2013 255 936
- US-A1- 2019 186 655

## Description

The present disclosure relates to a tube and a manufacturing method therefor, in particular to a high-strength tube resistant to aluminum sulfate corrosion and a manufacturing method therefor.

### BACKGROUND ART

At present, in water supply stations or water supply pipeline networks, it is usually necessary to add aluminum sulfate before the mixing tank and concentration tank for coagulation. Thus, in order to ensure the service life of pipelines and equipment, good aluminum sulfate corrosion resistance is required when manufacturing pipes or equipment such as aluminum sulfate mixing tanks, concentration tanks, connecting pipes for tank body, and pipes for adding aluminum sulfate, etc.

In prior arts, in order to prevent these equipment and pipelines from being corroded, UPVC and CPVC materials are generally used to produce the above-mentioned pipelines and equipment for transporting aluminum sulfate. However, the practical applications of UPVC and CPVC materials are not ideal because they are facing the problems such as difficulty in processing, large expansion coefficient, low strength, and tendency to softening and deformation during use.

Currently, some researchers are considering using carbon steel to prepare the above equipment and pipelines. However, the carbon steel inner walls of mixing tanks, concentration tanks, connecting pipes for tank body, and pipes for adding aluminum sulfate made of carbon steel materials will inevitably be corroded by aluminum sulfate during practical use. This will not only cause water pollution, but also very likely lead to pipe leaks and pipe bursts.

In addition, some researchers have tried to use 300 series austenitic stainless steel to prepare the above equipment and pipelines. However, 300 series austenitic stainless steel has lower structural strength than carbon steel and therefore requires a thicker thickness, which increases the amount of material used. In addition, 300 series austenitic stainless steel is difficult to weld and machine. Furthermore, 300 series stainless steel itself contains a relatively large amount of precious metal elements such as Cr and Ni, so the cost of using pure stainless steel in its production, manufacturing, and installation processes is relatively high.

Therefore, in view of the deficiencies and defects existing in the above-mentioned prior art, it is desired to obtain a new tube in which a reasonable design is adopted such that an aluminum sulfate corrosion-resistant layer can be formed on the surface of the carbon steel of base layer. The finished tube is resistant to aluminum sulfate corrosion, has good mechanical properties and high economic efficiency, and has great economic and social benefits.

EP 3 862 456 A1 describes an austenitic-stainless clad steel plate including a base material and a cladding material bonded to the base material, wherein the base material is made of carbon steel or low alloy steel and the cladding material is made of austenitic stainless steel. EP 3 511 082 B1 describes a clad welded pipe or tube comprising a first layer made of base metal, and a second layer placed on one surface of the first layer, and made of first cladding metal that is a material different from the base metal.

### SUMMARY

One of the objects of the present disclosure is to provide a tube in which a reasonable design is adopted such that an aluminum sulfate corrosion-resistant layer can be formed on the surface of the carbon steel of base layer. The finished tube is resistant to aluminum sulfate corrosion, has good mechanical properties and high economic efficiency, and has great economic and social benefits.

The present invention provides a tube according to claim 1 and a method for manufacturing the tube according to claim 6. Preferred embodiments are subject-matter of the dependent claims.

The tube of the present disclosure enables to solve the essential pain points of the 300 series stainless steel or carbon steel used in water supply stations in environments with aluminum sulfate corrosive media. The tube can be effectively used in pipelines and equipment used in water supply stations in environments with aluminum sulfate media, and greatly improves the applicability, safety, and durability of these pipelines and equipment, while avoiding secondary pollution to water quality.

In order to achieve the above object, the present invention provides a tube, wherein the tube has a corrosion-resistant layer and a base layer in a thickness direction, the corrosion-resistant layer is located at least on an inner wall of the tube, and the corrosion-resistant layer, in addition to Fe and inevitable impurities, further comprises the following chemical elements in wt%: $0 < C \leq 0.08 % ;$
Si: 0.3-0.6%;
Mn: 0.5-2.0%;
Ni: 11.00-13.00%;
Cr: 16.50-18.00%;
Mo: 2.00-3.00%;
N: 0.02-0.15%; and
Cu: 0.01-0.30%;
wherein Cr, Mo, N and Cu satisfy the following inequation: $Cr + 3.3 \times Mo + 16 \times N + 10 \times Cu \geq 26.0 % .$

Preferably, the corrosion-resistant layer comprises the following chemical elements in wt%: $0 < C \leq 0.08 % ;$
Si: 0.3-0.6%;
Mn: 0.5-2.0%;
Ni: 11.00-13.00%;
Cr: 16.50-18.00%;
Mo: 2.00-3.00%;
N: 0.02-0.15%; and
Cu: 0.01-0.30%;
the balance being Fe and inevitable impurities;
wherein Cr, Mo, N and Cu satisfy the following inequation: $Cr + 3.3 \times Mo + 16 \times N + 10 \times Cu \geq 26.0 % .$

In the tube of the present disclosure, in order to ensure the aluminum sulfate corrosion resistance of the tube, the aluminum sulfate corrosion resistance of the corrosion-resistant layer must first be ensured.

The operating conditions, where corrosive aluminum sulfate medium is used, in current water supply stations or water supply pipeline networks are as follows: a concentration of aluminum sulfate is 30% or less in wt%, and an operating temperature is 0 to 40 °C.

Based on the above operating conditions, the inventors optimized the chemical element composition of the corrosion-resistant layer of the tube, especially added a certain amount of Cu element, and designed a specialized corrosion resistance equivalent formula and requirements to control Cr, Mo, N and Cu to satisfy the following inequation: Cr+3.3×Mo+16×N+10×Cu≥26.0%.

It should be noted that Cu can further improve the corrosion resistance of steel, especially in reducing media such as sulfate ions. The effect is more significant when Cu and Mo are added together. Generally, the addition of copper will affect the thermal processing performance of the material. However, for the tube with composite material of the present disclosure, the proportion of the corrosion-resistant layer is relatively low, so the impact of the addition of copper on the overall thermal processing performance is negligible.

In the present disclosure, the design principles of the chemical elements of the corrosion-resistant layer are as follows.

C: In the corrosion-resistant layer of the present disclosure, C is a strong austenite-forming element, which can replace nickel to a certain extent, promote austenite formation, stabilize the austenite structure, and at the same time improve the strength of stainless steel. However, the content of C element should not be too high. When the content of carbon is too high, carbon and chromium will combine and form chromium-rich carbides at the grain boundaries, leading to intergranular corrosion. Therefore, in order to exert the beneficial effects of the C element, in the corrosion-resistant layer of the present disclosure, the mass percentage of the C element is controlled to satisfy 0<C≤0.08%.

Si: In the corrosion-resistant layer of the present disclosure, the main function of the Si element is to deoxidize during the smelting process. Therefore, it is generally necessary to add a certain amount of silicon. However, it should be noted that the content of Si element should not be too high. When the content of silicon is too high, the solubility of nitrogen will decrease. Therefore, in the corrosion-resistant layer of the present disclosure, the mass percentage of Si element is controlled to in the range of 0.3-0.6%.

Mn: In the corrosion-resistant layer of the present disclosure, the Mn element is an element that strongly stabilizes the austenite structure and can increase the solubility of nitrogen in steel. However, manganese has a negative impact on the corrosion resistance of austenitic stainless steel. Therefore, in view of the beneficial and adverse effects of the Mn element, in the corrosion-resistant layer of the present disclosure, the mass percentage of the Mn element is controlled to in the range of 0.5-2.0%, preferably 1.10-2.0%.

Ni: In the corrosion-resistant layer of the present disclosure, Ni is the most important element in forming and stabilizing the austenite phase. The addition of an appropriate amount of Ni element can ensure the formation of austenite structure in steel at room temperature. However, nickel is expensive. In order to ensure that the cost is relatively low, it is not advisable to add excessive nickel into steel. Therefore, in the corrosion-resistant layer of the present disclosure, the mass percentage of Ni element is controlled to in the range of 11.00-13.00%.

Cr: In the corrosion-resistant layer of the present disclosure, Cr is the guarantee of the stainlessness and corrosion resistance of the steel. Generally, the minimum chromium content required for corrosion resistance is 10.5%. Since the chromium element will significantly enhance the corrosion resistance, in order to ensure good corrosion resistance, the chromium content in the disclosed steel is controlled to be 16.50% or more. But it should be noted that Cr is also a main element for forming ferrite. When the content of chromium is too high, it is difficult to ensure that an austenite structure is obtained in the corrosion-resistant layer at room temperature. Therefore, in the corrosion-resistant layer of the present disclosure, the mass percentage of Cr element is controlled to be in the range of 16.50-18.00%.

Mo: In the corrosion-resistant layer of the present disclosure, Mo is an important element for improving corrosion resistance. The mechanism by which Mo improves corrosion resistance is that it stabilizes the passivation film and promotes the enrichment of chromium elements in the passivation film. In addition, molybdenum works synergistically with nitrogen to further improve pitting corrosion resistance. Therefore, the main function of adding molybdenum is to improve corrosion resistance. However, the content of Mo element should not be too high. If the content of molybdenum is too high, the cost of the alloy will increase. In order to ensure relatively low cost, in the corrosion-resistant layer of the present disclosure, the mass percentage of Mo element is controlled to be in the range of 2.00-3.00%.

N: In the corrosion-resistant layer of the present disclosure, N is a very strong element in forming, stabilizing and expanding the austenite zone. The addition of an appropriate amount of N element can effectively improve the pitting corrosion resistance of stainless steel. However, when the nitrogen content in steel is too high, it will increase the risk of formation of nitrogen-containing intermetallic phases, increase the difficulty of smelting and hot processing, and lead to production difficulties. Therefore, in the corrosion-resistant layer of the present disclosure, the mass percentage of the N element is controlled to be in the range of 0.02-0.15%.

Cu: In the corrosion-resistant layer of the present disclosure, the addition of an appropriate amount of Cu element can improve the corrosion resistance of the material. Moreover, Cu element can cooperate with molybdenum to stabilize the passivation film and promote the enrichment of chromium in the passivation film, thereby improving pitting corrosion resistance. Therefore, in the corrosion-resistant layer of the present disclosure, the mass percentage of Cu element is controlled to be in the range of 0.01-0.30%, preferably 0.12-0.30%, and more preferably 0.12-0.22%.

Correspondingly, in the corrosion-resistant layer of the tube of the present disclosure, while controlling the mass percentage of each chemical element, the elements Cr, Mo, N and Cu are also controlled to satisfy the following inequation: Cr+3.3×Mo+16×N+10×Cu≥26.0%, wherein each element in the formula is substituted with the mass percentage of the corresponding element. Through such control, it is possible to further ensure that the corrosion-resistant layer has excellent corrosion resistance in an aluminum sulfate environment.

The inevitable impurities in the corrosion-resistant layer include: S≤0.030% and P≤0.045%.

In the corrosion-resistant layer of the tube of the present disclosure, both P and S are inevitable impurities. In order to ensure the quality of the steel, as long as conditions allow, the lower the content of impurities in steel, the better.

The base layer comprises the following chemical elements in wt%:
C: 0.01-0.20%;
Si: 0.10-0.50%;
Mn: 0.50-2.00%;
Al: 0.02-0.04%;
Ti: 0.005-0.014%;
Nb: 0.005-0.020%; and $N \leq 0.006 % ;$
the balance being Fe and inevitable impurities.

Preferably, the base layer further comprises at least one of the following chemical elements: $0 < B \leq 0.0003 % ;$ $0 < Ni \leq 0.20 % ;$ $0 < Cr \leq 0.22 % ;$ and $0 < Mo \leq 0.12 % .$

In order to ensure that high mechanical properties are achieved for the tube of the present disclosure, the inventors also selected the chemical composition of the carbon steel of base layer. The chemical composition of the carbon steel of base layer is selected to ensure both high strength and good processability.

Therefore, in the present disclosure, the design principles of the chemical elements in the carbon steel of base layer are as follows.

C: In the base layer of the present disclosure, C is an element that stabilizes austenite, can play the role of solid solution strengthening in steel, and significantly improve the strength of the steel. However, the content of C element in steel should not be too high. When the content of C element in steel is too high, it is not only detrimental to the welding performance and toughness of the material, but also tends to increase hard phase structures such as pearlite and martensite-austenite island, adversely affecting the corrosion resistance of the steel. Therefore, taking into account the matching of strength and toughness of the steel plate as well as the requirements for the corrosion resistance of carbon steel materials, in the steel of base layer of the present disclosure, the mass percentage of the C element is controlled to be in the range of 0.01-0.20%.

The mass percentage of C element is controlled to 0.01-0.20%, which can not only ensure that the steel plate is imparted a certain hardness and strength when air-cooled after rolling, but also avoids the deterioration of the welding performance of the steel of base layer.

Si: In the base layer of the present disclosure, the addition of Si element into the steel can effectively improve the purity and deoxidation of the steel. Si element can play the role of solid solution strengthening in steel. However, the Si element is not conducive to the welding performance of the material. In the present disclosure, the silicon content of the carbon steel of base layer is controlled to be 0.50% or less, such that it will not have any impact on the corrosion resistance of the corrosion-resistant layer, and the carbon steel of base layer has good welding performance. Therefore, in the base layer of the present disclosure, the mass percentage of Si element is controlled to be in the range of 0.10-0.50%.

Mn: In the base layer of the present disclosure, the addition of an appropriate amount of Mn element in steel can delay the transformation of pearlite, reduce the critical cooling rate, and improve the hardenability of the steel. Moreover, Mn element also has the effect of solid solution strengthening and is the main solid solution strengthening element in steel. However, the added Mn element should not be too much. When the content of Mn element in steel is too high, it is easy to form segregation bands and martensitic structures that have a negative impact on the toughness of the steel, and the emergence of segregation bands will also lead to a reduction in the corrosion resistance of the steel. Generally, the manganese content in low-carbon microalloy steel does not exceed 2.00%, such that the Mn element contained in the carbon steel of base layer will not have a negative impact on the corrosion-resistant layer. Thus, in the base layer of the present disclosure, the mass percentage of Mn element is controlled to be in the range of 0.50-2.00%.

Al: In the base layer of the present disclosure, Al is a strong deoxidizing element. Al is added to ensure that the oxygen content in the steel is as low as possible. The residual Al after deoxidation and the N element in the steel can combine to form AlN precipitates, thereby improving the strength of the steel and refining the primary grain size of austenite in steel during heat treatment. However, Al content being too high may easily lead to the generation of alumina inclusions. Therefore, in the base layer of the present disclosure, the mass percentage of Al element is controlled to be in the range of 0.02-0.04%.

Ti: In the base layer of the present disclosure, Ti is a strong carbide-forming element. The addition of minor amount of Ti in steel is beneficial to fixing N in steel. The TiN formed by the combination of Ti and N can prevent the austenite grains in the base layer from excessively growing when the base layer slab is heated, and refine the primary grain size of austenite. In addition, Ti can also combine with carbon and sulfur in steel to form compounds such as TiC, TiS, Ti₄C₂S₂, etc., which can exist in the form of inclusions and second phase particles. In addition, these carbonitride precipitates of Ti can also prevent the growth of grains in the heat-affected zone during welding and improve the welding performance. However, Ti content being too high will lead to a large amount of carbides such as titanium carbide and their segregation and enrichment, affecting the mechanical properties of the material. Therefore, in the base layer of the present disclosure, the mass percentage of Ti element is controlled to be in the range of 0.005-0.014%.

Nb: In the base layer of the present disclosure, Nb is a strong carbide-forming element. The main purpose of adding a small amount of niobium into the carbon steel of base layer is to increase the recrystallization temperature to match the high final rolling temperature of the clad plate formed by the assembly of the base layer slab and the corrosion-resistant layer slab in the subsequent rolling process, such that the grains in the recrystallized and non-recrystallized zones of the base layer are refined after rolling, which is beneficial to improving the low-temperature impact toughness of the base layer. However, Nb content being too high will lead to the formation of large-sized Nb-rich precipitates, which reduces the plastic toughness of the material. Therefore, in the base layer of the present disclosure, the mass percentage of the Nb element is controlled to be in the range of 0.005-0.020%.

N: In the base layer of the present disclosure, the N element may form second phase particles with titanium and aluminum to refine the grains and improve the strength. However, when the mass percentage of the N element is too high, the amount of TiN generated is too large and the particles are too coarse, which will affect the plasticity of the carbon steel plate of base layer of the composite of the present disclosure. Therefore, in the base layer of the present disclosure, the mass percentage of the N element is controlled to N: 0.006% or less.

B: In the present disclosure, B can greatly improve the hardenability of steel. In case where air cooling is performed after rolling for manufacturing high corrosion-resistant clad plates (corrosion-resistant layer slab + base layer slab), it is required to obtain the structure of ferrite + pearlite as much as possible to suppress the formation of bainite. However, if the B content is too high, it tends to cause segregation and form compounds with oxygen and nitrogen, resulting in that the corresponding purpose cannot be achieved. Therefore, in the present disclosure, it is required to control the addition amount of B element in the base layer to satisfy 0<B≤0.0003%.

Ni: In the present disclosure, Ni is an element that stabilizes austenite and has a certain effect on improving the strength of steel. In addition, the addition of an appropriate amount of Ni into steel, especially the addition of an appropriate amount of Ni into quenched and tempered steel, can significantly improve the low-temperature impact toughness of steel. However, Ni content being too high will increase the carbon equivalent and affect the welding performance. Moreover, Ni is a rare metal that will cause resource waste and cost increase. Therefore, in the base layer of the present disclosure, an appropriate amount of Ni may be added, and the added amount of Ni element is controlled to satisfy 0<Ni≤0.20%.

Cr: In the present disclosure, Cr element has a smaller segregation tendency than Mn. When the Mn content in the carbon steel of base layer is high, and there are obvious segregation bands and band-like structures in the steel, the Mn content can be appropriately reduced, and the insufficient part can be replaced with Cr. Secondly, the addition of an appropriate amount of Cr element in the carbon steel of base layer is also helpful to inhibit the diffusion of Cr in the corrosion-resistant layer to the base layer. However, Cr content being too high will affect the phase transition temperature of the substrate and affect the mechanical properties of the substrate. Therefore, in the base layer of the present disclosure, Cr element in a content of 0<Cr≤0.22% may be added.

Mo: In the present disclosure, the Mo element can significantly refine grains and improve the strength and toughness of steel. In addition, Mo can also reduce the temper brittleness of steel, and can also precipitate very fine carbides during tempering, which significantly strengthens the steel of base layer. In addition, the addition of Mo element is also beneficial to suppress the self-tempering brittleness that easily occurs in steel plates during air cooling. However, Mo content being too high will increase the carbon equivalent, affect the welding performance, and lead to resource waste and cost increase. Therefore, in the base layer of the present disclosure, an appropriate amount of Mo may be added, and the added amount of Mo element is controlled to satisfy 0<Mo≤0.12%.

Preferably, a single-layer corrosion-resistant layer has a thickness accounting for 0.5-10% of a total thickness of the tube, and the base layer comprises the following chemical elements in wt%:
C: 0.01-0.18%;
Si: 0.10-0.30%;
Mn: 0.50-1.50%;
Al: 0.02-0.03%;
Ti: 0.005-0.014%;
Nb: 0.005-0.015%; and $N \leq 0.006 % ;$
the balance being Fe and inevitable impurities.

The inevitable impurities in the base layer includes: S≤0.010% and P≤0.015%. In the above technical solutions of the present disclosure, P and S are inevitable impurities in the base layer. S in steel will combine with Mn to form a plastic inclusion, manganese sulfide, which is especially detrimental to the transverse plasticity and toughness of steel. Therefore, the content of S element in the base layer should be as low as possible. In addition, P is also a harmful element in steel, which can seriously damage the plasticity and toughness of steel plates.

Therefore, in the present disclosure, both S and P are inevitable impurities, and their content should be as low as possible. Considering the practical steelmaking level of steel plants, S and P elements in the base layer of the present disclosure are controlled to satisfy: S≤0.010% and P≤0.015%.

A single-layer corrosion-resistant layer has a thickness accounting for 0.5-50%, more preferably 2.5-28.6% of a total thickness of the tube. In other words, if the tube has corrosion-resistant layers on both the inner and outer surfaces, the thickness of each of the corrosion-resistant layers accounts for 0.5-50% of the total thickness of the tube. If the tube only has a corrosion-resistant layer on the inner surface, the thickness of the corrosion-resistant layer accounts for 0.5-50% of the total thickness of the tube.

In the present disclosure, the selection of the thickness of the corrosion-resistant layer plays a crucial role in obtaining good corrosion resistance, mechanical properties, and formability of the tube of the present disclosure according to the operating conditions. When the corrosion-resistant layer is too thick, it will affect the mechanical properties and production costs of the material. When the corrosion-resistant layer is too thin, the corrosion resistance and service life of the material will be reduced. To this end, in the present disclosure, the thickness of single-layer corrosion-resistant layer is controlled to be 0.5-50%, more preferably 2.5-28.6% of the total thickness of the tube.

Preferably, the single-layer corrosion-resistant layer has a thickness accounting for 2.5-20% of the total thickness of the tube.

Preferably, the base layer has a microstructure of ferrite + pearlite, or ferrite + pearlite + bainite, and the corrosion-resistant layer has a microstructure of austenite.

Preferably, there is a diffusion layer or transition layer between the corrosion-resistant layer and base layer, and the diffusion layer or transition layer has a thickness of about 50 to 120 µm.

The tube has a yield strength of ≥ 426 MPa, a tensile strength of ≥ 580 MPa, an elongation of ≥ 31%, and an uniform corrosion rate (i.e., average corrosion rate) of ≤ 0.05 mm/year in an environment where the temperature is ≤ 40 °C and the aluminum sulfate concentration is ≤ 30 wt%.

Accordingly, another object of the present disclosure is to provide a method for manufacturing the above-mentioned tube, which is simple and feasible and can effectively be used to prepare the above-mentioned tube.

In order to achieve the above object, the present invention provides a method for manufacturing the above-mentioned tube, including the following steps:
(1) preparing a corrosion-resistant layer slab and a base layer slab;
(2) assembling the corrosion-resistant layer slab and the base layer slab to obtain a clad slab, wherein a single-layer corrosion-resistant layer preferably has a thickness accounting for 0.5-50%, more preferably 2.5-28.6% of the total thickness of the clad slab (the ratio of the thickness of single-layer corrosion-resistant layer to the total thickness of the tube for the finished tube is basically the same as the thickness ratio described in this step);
(3) heating and rolling: heating the clad slab at a temperature of 1150 to 1200 °C, and then performing multi-pass rolling, wherein a total rolling reduction rate is not less than 90%, and a final rolling is performed at a temperature of not lower than 920 °C;
(4) coiling: after water cooling, performing coiling at a temperature of 500 to 620 °C to obtain a hot-rolled coil;
(5) performing surface treatment on the hot-rolled coil; and
(6) tube making.

In the above-mentioned manufacturing method of the present disclosure, the smelting and casting process may be designed according to the chemical composition to prepare the corrosion-resistant layer slab and base layer slab, which are then assembled to obtain a clad plate (corrosion-resistant layer plate + base layer plate) with high corrosion resistance. The obtained clad plate with high corrosion resistance is further heated, rolled, and coiled to obtain a hot-rolled coil with a clad interlayer structure. The tube of the present disclosure can be obtained by subjecting the hot-rolled coil to surface treatment and then tube making.

In the present disclosure, the inventors have optimized the design of the heating and rolling process in step (3) to ensure that a transition layer structure of a certain thickness can be formed between the corrosion-resistant layer and the base layer through heating, rolling and other processes, so as to achieve complete metallurgical bonding of the corrosion-resistant layer and the base layer, thus ensuring the resistance to aluminum sulfate corrosion and mechanical properties while improving the applicability and economy of the material, thereby solving the essential pain points of the 300 series stainless steel or carbon steel currently used in water supply stations in environments with aluminum sulfate corrosive media.

In step (2) of the manufacturing method of the present disclosure, the prepared corrosion-resistant layer slab and base layer slab may be pre-treated, and the adjoining planes of the slabs may be welded at the edges to seal, and the joint planes after welding and sealing may be evacuated to complete the assembly.

Correspondingly, in step (5), pickling or mechanical descaling may be used for surface treatment of the hot-rolled coils. In addition, in the tube making process of step (6), conventional spiral welding or straight seam welding may be used for forming and welding; welding methods may be selected from submerged arc welding, metal gas arc welding, tungsten inert gas welding, plasma arc welding, welding rod arc welding, high frequency welding and laser welding.

Preferably, in step (3), the final rolling is performed at a temperature of 920 to 1000 °C.

Preferably, the method further includes a step of preheating between step (2) and step (3), wherein the preheating is performed at a temperature of 1100 to 1250 °C.

In the manufacturing method of the present disclosure, whether to perform a preheating process between step (2) and step (3) can also be determined according to the performance requirements of the finished product. In the preheating process, the clad slab obtained by assembling the slabs may be heated at a temperature of 1100 to 1250 °C, such that a uniform austenitized structure is obtained in the corrosion-resistant layer on the surface of the clad slab, the carbides that may previously exist are completely dissolved, and at the same time, the compounds of alloy elements such as niobium and titanium in the carbon steel are completely or partially dissolved; and such that the elements in the corrosion-resistant layer and the carbon steel of base layer diffuse at the interface to form a stable transition layer; then it is slowly cooled to room temperature.

Preferably, the method further includes cold rolling and annealing between step (5) and step (6). Preferably, the annealing is performed at a temperature of 900 to 1000 °C.

In the manufacturing method of the present disclosure, in practical use, if the target product before tube making is a cold-rolled coil instead of a hot-rolled coil, steps of cold rolling and annealing may be further added between step (5) and step (6) to cold roll the coil to the target thickness, and then annealing is performed.

As indicated above, in the present disclosure, the inventors have designed the compositions of the corrosion-resistant layer and base layer as well as the ratio of the two, a corrosion-resistant layer that is resistant to aluminum sulfate corrosion is formed on the surface of the carbon steel plate of base layer through rolling process, and a plate or strip that is resistant to aluminum sulfate corrosion, has good mechanical properties and high economic efficiency is thereby obtained. The plate or strip is then processed into tubes, which can be effectively used in pipelines and equipment in water supply stations in environments with aluminum sulfate corrosive media.

It should be noted that during the design of the present disclosure, the difficulties include:
1) The design of the compositions of the corrosion-resistant layer and base layer need to meet the comprehensive performance of the material. The composition of the corrosion-resistant layer needs to be designed based on the resistance to aluminum sulfate corrosion to meet the requirements for corrosion resistance under operating conditions. In addition to meeting the mechanical performance requirements, the following must be taken into account for the composition design of the carbon steel of base layer: when the carbon content in the transition layer between the two layers is high, there is a lack of stabilizing elements, and there will be an obvious decarburization layer at the carbon steel side of the interface joint, resulting in uneven carbon steel structure of the base material, easy to generate surface defects after processing, and difficult to meet mechanical properties.
2) The differences in the ratio and material properties of the corrosion-resistant layer metal and the base layer metal will make it difficult to control the heating process, rolling process, and heat treatment process. For example, the temperature during heating is uneven, causing deformation and bulging, resulting in inability to bond with the base layer. For example, it tends to separate from the substrate and crack during the rolling process, making it difficult to ensure the uniformity of thickness.
3) For pipes and equipment, such as aluminum sulfate mixing tanks, concentration tanks, connecting pipes for tank body, and pipes for adding aluminum sulfate, etc. used in water supply stations in environments with aluminum sulfate corrosive media, if the early cladding is not completed and the bonding quality is poor, the continuity and uniformity of the corrosion-resistant layer of the finished product cannot be guaranteed after subsequent pickling, tube making and forming, welding and other processes, which will result in huge hidden dangers to the applicability, safety and durability of equipment and pipes.

In the present disclosure, the inventors successfully overcome the above difficulties through reasonable design, and the tube of the present disclosure is thereby prepared and obtained.

Compared with the prior art, the tube and its manufacturing method of the present disclosure have the following advantages and beneficial effects:
In the present disclosure, in case where the inventors take into account the operating conditions of the current pipelines and equipment in water supply stations in environments with aluminum sulfate corrosive media, and design the compositions of the corrosion-resistant layer and base layer as well as the ratio of the two, the corrosion-resistant layer and the base layer are combined to a slab, and subjected to appropriate processes such as heating, rolling, coiling and tube making to obtain a tube that is resistant to aluminum sulfate corrosion, has good mechanical properties and high economic efficiency. The tube has a yield strength of ≥ 426 MPa, a tensile strength of ≥ 580 MPa, an elongation of ≥ 31%, and a uniform corrosion rate (i.e. average corrosion rate) of ≤ 0.05 mm/year in an environment where the temperature is ≤ 40 °C and the aluminum sulfate concentration is ≤ 30 wt%.

In the present disclosure, a transition layer structure of a certain thickness is formed between the corrosion-resistant layer and the base layer through processes such as heating and rolling, so as to achieve complete metallurgical bonding of the corrosion-resistant layer and the base layer, thus ensuring the resistance to aluminum sulfate corrosion and mechanical properties while improving the applicability and economy of the material.

The tubes manufactured using the above designed composition and process control methods can solve the essential pain points of the 300 series stainless steel or carbon steel used in water supply stations in environments with aluminum sulfate corrosive media. The tubes can be effectively used in pipelines and equipment such as aluminum sulfate mixing tanks, concentration tanks, connecting pipes for tank body, and pipes for adding aluminum sulfate used in water supply stations in environments with aluminum sulfate media. The tubes can meet the requirements of these pipelines and equipment for resistance to aluminum sulfate corrosion and mechanical properties, and greatly improves the applicability, safety, and durability of these pipelines and equipment, while avoiding secondary pollution to water quality, and has great economic and social benefits.

Compared with the 300 series stainless steel tubes currently used in aluminum sulfate mixing tanks, concentration tanks, connecting pipes for tank body, and pipes for adding aluminum sulfate in water supply plants, the tubes of the present disclosure have higher strength and better corrosion resistance, are simpler to weld and machine, and are more economical. Compared with carbon steel tubes, the steel plates or strips for the tubes disclosed in the present disclosure can save the process of corrosion-resistant coating on the tube, while has corrosion resistance and durability that is difficult to achieve with carbon steel tubes, and is more energy-saving, environmentally friendly, and maintenance-free.

### BRIEF DESCRIPTION OF DRAWINGS

Figure 1 is a schematic diagram of the interlayer structure of a tube according to an embodiment of the present disclosure.
Figure 2 is a schematic diagram of the interlayer structure of a tube according to another embodiment of the present disclosure.
Figure 3 is a photograph of the microstructure of the bonding interface between the base layer and the corrosion-resistant layer of the tube in Example 4.
Figure 4 is a photograph of the microstructure of the base layer of the tube in Example 4.

### DETAILED DESCRIPTION

The tube and its manufacturing method of the present disclosure will be further explained and described below with reference to specific examples. However, the explanation and description do not constitute undue limitations on the technical solutions of the present disclosure.

### Examples 1-8

Table 1 lists the mass percentage of each chemical element in the corrosion-resistant layer of the tubes in Examples 1-8.

**Table 1 (wt%, the balance being Fe and other inevitable impurities except for P and S)**

| No. | C | Si | Mn | Ni | Cr | Mo | N | Cu | S | P | Cr+3.3×Mo+16×N+10×Cu |
|---|---|---|---|---|---|---|---|---|---|---|---|
| Example 1 | 0.016 | 0.52 | 1.14 | 12.45 | 17.20 | 2.55 | 0.12 | 0.12 | 0.002 | 0.026 | 28.7 |
| Example 2 | 0.054 | 0.36 | 1.28 | 11.05 | 18.00 | 2.00 | 0.05 | 0.16 | 0.001 | 0.029 | 27.0 |
| Example 3 | 0.080 | 0.6 | 0.50 | 13.00 | 16.50 | 3.00 | 0.02 | 0.20 | 0.030 | 0.045 | 28.7 |
| Example 4 | 0.015 | 0.45 | 1.10 | 11.18 | 16.70 | 2.16 | 0.08 | 0.22 | 0.002 | 0.032 | 27.3 |
| Example 5 | 0.023 | 0.45 | 1.90 | 11.86 | 17.32 | 2.36 | 0.14 | 0.15 | 0.002 | 0.030 | 28.8 |
| Example 6 | 0.018 | 0.39 | 1.27 | 11.80 | 16.52 | 2.96 | 0.06 | 0.19 | 0.001 | 0.035 | 29.15 |
| Example 7 | 0.017 | 0.38 | 1.27 | 11.80 | 16.52 | 2.96 | 0.06 | 0.3 | 0.001 | 0.035 | 29.26 |
| Example 8 | 0.023 | 0.45 | 1.90 | 11.86 | 17.32 | 2.36 | 0.14 | 0.01 | 0.002 | 0.030 | 27.4 |

| | | | | | | | | | | | |
|---|---|---|---|---|---|---|---|---|---|---|---|
| Note: In Table 1, each element in the formula Cr+3.3×Mo+16×N+10×Cu is substituted with the mass percentage of the corresponding element. | | | | | | | | | | | |

Table 2 lists the mass percentage of each chemical element in the base layer of the tubes in Examples 1-8.

**Table 2 (wt%, the balance being Fe and other inevitable impurities except for P and S)**

| No. | C | Si | Mn | Al | Ti | Nb | N | B | Ni | Cr | Mo | S | P |
|---|---|---|---|---|---|---|---|---|---|---|---|---|---|
| Example 1 | 0.01 | 0.30 | 1.50 | 0.030 | 0.010 | 0.015 | 0.0060 | 0.0002 | 0.20 | - | - | 0.010 | 0.015 |
| Example 2 | 0.14 | 0.25 | 1.00 | 0.030 | 0.014 | 0.011 | 0.0052 | 0.0002 | - | 0.20 | - | 0.005 | 0.010 |
| Example 3 | 0.18 | 0.15 | 0.50 | 0.020 | 0.005 | 0.005 | 0.0040 | 0.0001 | - | 0.10 | | 0.004 | 0.008 |
| Example 4 | 0.11 | 0.30 | 1.48 | 0.026 | 0.008 | 0.010 | 0.0038 | 0.0001 | 0.10 | - | - | 0.005 | 0.008 |
| Example 5 | 0.10 | 0.35 | 1.50 | 0.040 | 0.008 | 0.020 | 0.0045 | 0.0003 | - | - | 0.10 | 0.005 | 0.010 |
| Example 6 | 0.08 | 0.5 | 2.00 | 0.022 | 0.013 | 0.018 | 0.0043 | - | - | - | - | 0.003 | 0.011 |
| Example 7 | 0.08 | 0.5 | 2.00 | 0.022 | 0.013 | 0.018 | 0.0043 | - | - | - | - | 0.003 | 0.011 |
| Example 8 | 0.10 | 0.35 | 1.50 | 0.040 | 0.008 | 0.020 | 0.0045 | 0.0003 | - | - | 0.10 | 0.005 | 0.010 |

The tubes in Examples 1-8 of the present disclosure were all made using the following steps:
(1) In accordance with the chemical compositions shown in Tables 1 and 2, smelting and casting were performed to prepare a corrosion-resistant layer slab and a base layer slab, respectively.
(2) Assembling the corrosion-resistant layer slab and base layer slab to obtain a clad slab: a single-layer corrosion-resistant layer was controlled to have a thickness accounting for 0.5-50% of the total thickness of the clad slab (the ratio of the thickness of single-layer corrosion-resistant layer to the total thickness of the tube for the finished tube was basically the same as the thickness ratio described in this step); the corrosion-resistant layer slab and base layer slab were pre-treated, and the edges of the adjoining planes of the slabs were welded to seal, and the joint planes after welding and sealing were evacuated; after assembling the slabs, whether to perform a preheating process was determined according to the performance requirements of the finished product, and in the case of preheating, the slab was preheated at a preheating temperature of 1100 to 1250 °C.
(3) Heating and rolling: the clad slab was heated at a temperature of 1150 to 1200 °C, and then multi-pass rolling was performed within the ranges of recrystallization and non-recrystallization temperatures of austenite in the corrosion-resistant layer slab and base layer slab, wherein the total rolling reduction rate was not less than 90%, and the final rolling temperature was not lower than 920 °C, preferably in the range of 920 to 1000 °C.
(4) Coiling: after water cooling, coiling was performed at a temperature of 500 to 620 °C to obtain a hot-rolled coil.
(5) Performing surface treatment on the hot-rolled coil by pickling or mechanical methods to remove phosphorus. In case where the target product was a cold-rolled coil, cold rolling and annealing processes were further performed. After cold rolling to the target thickness, annealing was performed at an annealing temperature of 900 to 1000 °C.
(6) Tube making: spiral welding or straight seam welding was used for forming and welding. Welding methods can be selected from various methods such as submerged arc welding, metal gas arc welding, tungsten inert gas welding, plasma arc welding, welding rod arc welding, high frequency welding and laser welding for tube making.

It should be noted that in the present disclosure, the tubes in Examples 1-8 of the present disclosure were all produced using the above process steps from step (1) to step (6), and their chemical composition and related process parameters all met the designed specification control requirements of the present disclosure.

Table 3 lists the specific process parameters in the steps of the above manufacturing method for the tubes in Examples 1-8.

**Table 3**

| No. | Step (2) | | Step (3) | | | Step (4) | Step (5) | | | | |
|---|---|---|---|---|---|---|---|---|---|---|---|
| | Thickness of single-layer corrosion-resistant layer/Total thickness of clad slab (%) | Preheating temperature (°C) | Heating temperature (°C) | Total rolling reduction rate (%) | Final rolling temperature (°C) | Coiling temperature | Thickness of hot-rolled plate (mm) | Thickness of corrosion-resistant layer of hot-rolled plate (µm) | Annealing temperature of cold rolling (°C) | Thickness of cold-rolled plate (mm) | Thickness of corrosion-resistant layer of cold-rolled plate (µm) |
| Example 1 | 2.5 | 1240 | 1170 | 99.6 | 980 | 620 | 4 | 100 | 1000 | 1.2 | 30 |
| Example 2 | 16.9 | 1250 | 1160 | 97.5 | 1000 | 620 | 8 | 1350 | - | - | - |
| Example 3 | 2.5 | 1180 | 1150 | 99.4 | 990 | 550 | 4 | 100 | 900 | 2.0 | 50 |
| Example 4 | 16.7 | 1200 | 1180 | 96.3 | 980 | 580 | 12 | 2000 | - | - | - |
| Example 5 | 20.0 | 1150 | 1200 | 96.9 | 930 | 520 | 10 | 2000 | - | - | - |
| Example 6 | 28.6 | 1230 | 1200 | 95.6 | 920 | 500 | 14 | 4000 | - | - | - |
| Example 7 | 50 | 1230 | 1200 | 95.6 | 920 | 500 | 14 | 7000 | - | - | - |
| Example 8 | 19.0 | 1150 | 1200 | 96.9 | 930 | 520 | 10 | 1900 | - | - | - |

It should be noted that according to the process parameters shown in Table 3 above, for Example 1 and Example 3, after the surface treatment of the hot-rolled coils in step (5), cold rolling and annealing were further performed to obtain cold-rolled plates; while for Example 2 and Example 4 to Example 8, hot-rolled plates were obtained by step (5).

Correspondingly, for Examples 1-8, the plates prepared in step (5) were further used to prepare corresponding tubes in the tube making process of step (6).

The finished tubes in Examples 1-8 produced by the above process were sampled, and the microstructure of the tube samples in Examples 1-8 was further observed. After observing the microstructure of the tube in each example, the mechanical properties of the tube samples in Examples 1-8 were tested. The test results obtained are listed in Table 4 below.

The testing methods for relevant mechanical properties are as follows. The test was carried out according to GB/T 6396-2008 *"Clad steel plates - Mechanical and technological test",* and the yield strength, tensile strength and elongation of tube samples in Examples 1-8 were obtained.

Table 4 lists the microstructure and the test results of mechanical properties of the tubes in Examples 1-8.

**Table 4**

| No. | Yield Strength (MPa) | Tensile strength (MPa) | Elongation (%) | Microstructure | |
|---|---|---|---|---|---|
| | | | | Base layer | Corrosion-resistant layer |
| Example 1 | 426 | 582 | 40.5 | Ferrite + Pearlite | Austenite |
| Example 2 | 483 | 628 | 38.0 | Ferrite + Pearlite | Austenite |
| Example 3 | 480 | 650 | 40.0 | Ferrite + Pearlite + Bainite | Austenite |
| Example 4 | 482 | 638 | 38.0 | Ferrite + Pearlite | Austenite |
| Example 5 | 508 | 616 | 33.0 | Ferrite + Pearlite + Bainite | Austenite |
| Example 6 | 496 | 620 | 31.0 | Ferrite + Pearlite + Bainite | Austenite |
| Example 7 | 450 | 580 | 31.0 | Ferrite + Pearlite + Bainite | Austenite |
| Example 8 | 508 | 616 | 33.0 | Ferrite + Pearlite + Bainite | Austenite |

Correspondingly, in order to verify the aluminum sulfate corrosion resistance of tubes in Examples 1-8 prepared by the present disclosure, the tubes in Examples 1-8 were sampled again, and the aluminum sulfate corrosion resistance test was performed on the obtained tube samples in Examples 1-8. The test results are listed in Table 5 below.

Aluminum sulfate corrosion resistance test: The samples of Examples 1-8 were hung in aluminum sulfate solution (temperature ≤ 40 °C and aluminum sulfate concentration ≤ 30 wt%). After 3 months, they were taken out and the surface condition of the corrosion-resistant layer was observed. The weight loss at the beginning of corrosion was measured to see whether there was corrosion phenomenon, and the annual corrosion rate of each example was calculated to obtain the aluminum sulfate corrosion resistance of the tube samples in Examples 1-8.

Table 5 lists the test results of the aluminum sulfate corrosion resistance of the tubes in Examples 1-8.

**Table 5**

| Concentration of aluminum sulfate (%) | 0.5 | 1.0 | 10.0 | 10.0 | 20.0 | 20.0 | 30.0 | 30.0 |
|---|---|---|---|---|---|---|---|---|
| Temperature (°C) | 40 | 30 | 20 | 40 | 30 | 40 | 20 | 40 |
| Example 1 | E* | E | E | E | E | E | E | E |
| Example 2 | E | E | E | E | E | S* | S | S |
| Example 3 | E | E | E | E | E | E | E | E |
| Example 4 | E | E | E | E | E | E | E | S |
| Example 5 | E | E | E | E | E | E | E | E |
| Example 6 | E | E | E | E | E | E | E | S |
| Example 7 | E | E | E | E | E | E | E | S |
| Example 8 | E | E | E | E | E | E | E | E |

| | | | | | | | | |
|---|---|---|---|---|---|---|---|---|
| Note: E represents an average corrosion rate of ≤ 0.010 mm/year; E* represents an average corrosion rate of 0.010-0.025 mm/year; S represents an average corrosion rate of 0.025-0.040 mm/year; and S* represents an average corrosion rate of 0.040-0.050 mm/year. | | | | | | | | |

Taking together the above Table 4 and Table 5, it can be seen that in the present disclosure, the tubes in Examples 1-8 exhibited excellent mechanical properties, with a yield strength in the range of 426 to 508 MPa, a tensile strength in the range of 580 to 650 MPa, and an elongation in the range of 31.0% to 40.5%. Meanwhile, Examples 1-8 also exhibited good aluminum sulfate corrosion resistance, with an annual corrosion rate of aluminum sulfate of ≤ 0.05 mm/year under the test environment.

It can be seen from the above examples that tubes with good corrosion resistance and mechanical properties were obtained by adopting appropriate materials, component design, rolling and heat treatment processes and cooperating with the tube making process in the present disclosure, through which the essential pain points of the 300 series stainless steel or carbon steel used in water supply stations in environments with aluminum sulfate corrosive media can be solved, and the requirements for pipelines and equipment used in the water supply stations in environments with aluminum sulfate corrosive media can be met, exhibiting great economic and social benefits.

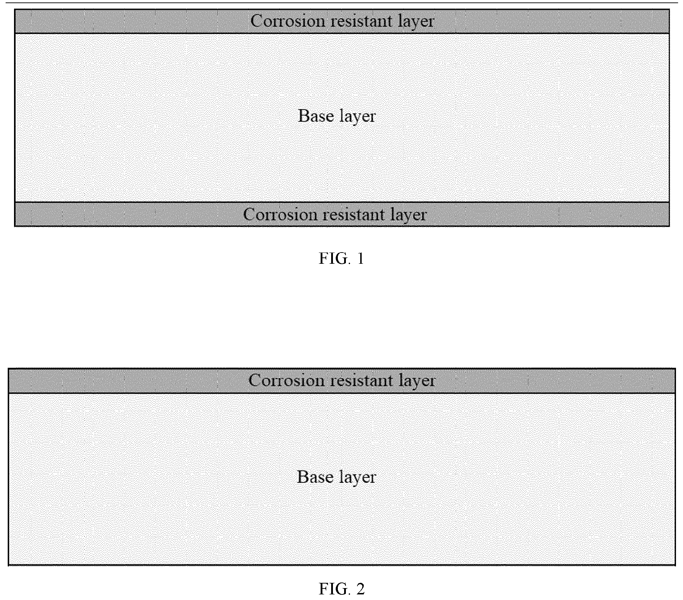

Figure 1 is a schematic diagram of the interlayer structure of a tube according to an embodiment of the present disclosure.

As shown in Figure 1, in this embodiment, the tube of the present disclosure comprises two corrosion-resistant layers located on the inner and outer surfaces of the tube and a base layer located therebetween.

Figure 2 is a schematic diagram of the interlayer structure of a tube according to another embodiment of the present disclosure.

As shown in Figure 2, in this embodiment, the tube of the present disclosure comprises a corrosion-resistant layer located on the inner surface of the tube and a base layer located on the outer surface of the tube.

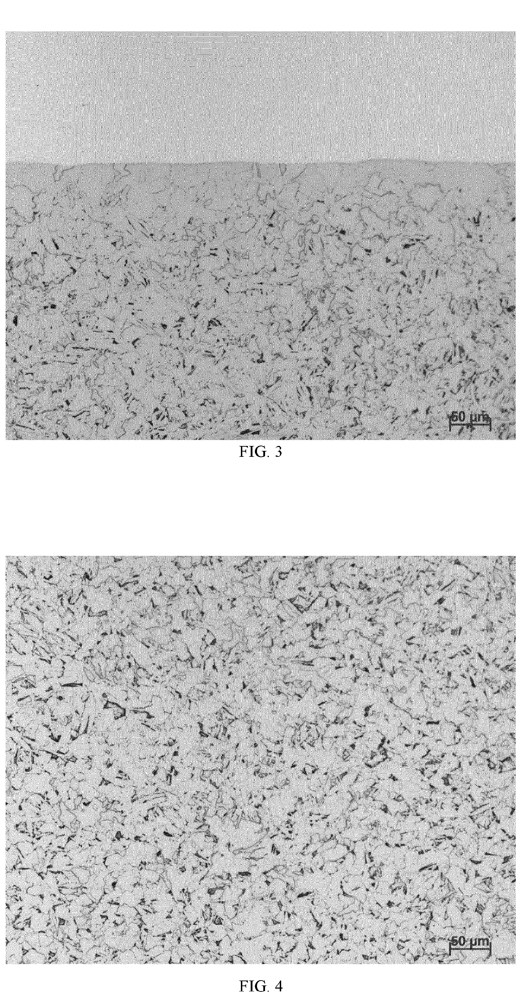

Figure 3 is a photograph of the microstructure of the bonding interface between the base layer and the corrosion-resistant layer of the tube in Example 4.

Figure 4 is a photograph of the microstructure of the base layer of the tube in Example 4.

As shown in Figures 3 and 4, in Example 4, the tube had a total thickness of 12 mm, and the single-layer corrosion-resistant layer had a thickness of 2 mm.

It was observed that in Example 4, the base layer of the tube had a microstructure of ferrite + pearlite; and the corrosion-resistant layer had a microstructure of austenite. Correspondingly, in the present disclosure, elements in the corrosion-resistant layer and the base layer diffused at the bonding interface to form a stable diffusion layer (i.e., transition layer), and the diffusion distance (i.e., the thickness of the transition layer) was about 50 µm to 120 µm.

It should also be noted that the embodiments listed above are only specific examples of the present disclosure. Obviously, the present disclosure is not limited to the above embodiments.

## Claims

1. A tube, wherein the tube has a corrosion-resistant layer and a base layer in a thickness direction, the corrosion-resistant layer is located at least on an inner wall of the tube, and the corrosion-resistant layer, in addition to Fe and inevitable impurities, further comprises the following chemical elements in wt%: $0 < C \leq 0.08 % ;$
Si: 0.3-0.6%;
Mn: 0.5-2.0%;
Ni: 11.00-13.00%;
Cr: 16.50-18.00%;
Mo: 2.00-3.00%;
N: 0.02-0.15%; and
Cu: 0.01-0.3%, preferably Cu: 0.12-0.3%, more preferably Cu: 0.12-0.22%;
wherein Cr, Mo, N and Cu satisfy the following inequation: $Cr + 3.3 \times Mo + 16 \times N + 10 \times Cu \geq 26.0 % ,$
wherein the inevitable impurities in the corrosion-resistant layer include: S≤0.030% and P≤0.045,
wherein the base layer comprises the following chemical elements in wt%:
C: 0.01-0.20%;
Si: 0.10-0.50%;
Mn: 0.50-2.00%;
Al: 0.02-0.04%;
Ti: 0.005-0.014%;
Nb: 0.005-0.020%; and $N \leq 0.006 % ;$
the balance being Fe and inevitable impurities, wherein the inevitable impurities in the base layer include: S≤0.010% and P≤0.015%
wherein the base layer optionally further comprises at least one of the following chemical elements: $0 < B \leq 0.0003 % ;$ $0 < Ni \leq 0.20 % ;$ $0 < Cr \leq 0.22 % ;$ and $0 < Mo \leq 0.12 % ,$
wherein a single-layer corrosion-resistant layer has a thickness accounting for 0.5-50%, preferably 2.5-28.6%, more preferably 2.5-20%, of a total thickness of the tube,
wherein the tube has a yield strength of ≥ 426 MPa, a tensile strength of ≥ 580 MPa, an elongation of ≥ 31%, and an average corrosion rate of ≤ 0.05 mm/year in an environment where the temperature is ≤ 40 °C and the aluminum sulfate concentration is ≤ 30 wt%.

2. The tube according to claim 1, wherein the corrosion-resistant layer comprises the following chemical element in wt%:
Cu: 0.01-0.22%.

3. The tube according to claim 1, wherein a single-layer corrosion-resistant layer has a thickness accounting for 0.5-10% of a total thickness of the tube, and wherein the base layer comprises the following chemical elements in wt%:
C: 0.01-0.18%;
Si: 0.10-0.30%;
Mn: 0.50-1.50%;
Al: 0.02-0.03%;
Ti: 0.005-0.014%;
Nb: 0.005-0.015%; and $N \leq 0.006 % ;$
the balance being Fe and inevitable impurities.

4. The tube according to claim 1 or 2, wherein the base layer has a microstructure of ferrite + pearlite, or ferrite + pearlite + bainite; and wherein the corrosion-resistant layer has a microstructure of austenite.

5. A method for manufacturing the tube according to any of claims 1 to 4, including the following steps:
(1) preparing a corrosion-resistant layer slab and a base layer slab;
(2) assembling the corrosion-resistant layer slab and the base layer slab to obtain a clad slab, wherein a single-layer corrosion-resistant layer preferably has a thickness accounting for 0.5-50%, more preferably 2.5-20% of a total thickness of the clad slab;
(3) heating and rolling: heating the clad slab at a temperature of 1150 to 1200 °C, and then performing multi-pass rolling, wherein a total rolling reduction rate is not less than 90%, and a final rolling is performed at a temperature of not lower than 920 °C;
(4) coiling: after water cooling, performing coiling at a temperature of 500 to 620 °C to obtain a hot-rolled coil;
(5) performing surface treatment on the hot-rolled coil; and
(6) tube making.

6. The method according to claim 5, wherein in step (3), the final rolling is performed at a temperature of 920 to 1000 °C.

7. The method according to claim 5, wherein the method further includes a step of preheating between step (2) and step (3), wherein the preheating is performed at a temperature of 1100 to 1250 °C.

8. The method according to claim 5, wherein the method further includes cold rolling and annealing between step (5) and step (6), wherein the annealing is preferably performed at a temperature of 900 to 1000 °C.

## Patentansprüche

1. Rohr, wobei das Rohr in Dickenrichtung eine korrosionsbeständige Schicht und eine Grundschicht aufweist, wobei sich die korrosionsbeständige Schicht zumindest an einer Innenwand des Rohrs befindet und wobei die korrosionsbeständige Schicht zusätzlich zu Fe und unvermeidbaren Verunreinigungen die folgenden chemischen Elemente in Gew.-% enthält: $0 < C \leq 0 , 08 % ;$
Si: 0,3-0,6 %;
Mn: 0,5-2,0 %;
Ni: 11,00-13,00 %;
Cr: 16,50-18,00 %;
Mo: 2,00-3,00 %;
N: 0,02-0,15 %; und
Cu: 0,01-0,3 %, vorzugsweise Cu: 0,12-0,3 %, noch bevorzugter Cu: 0,12-0,22 %;
wobei Cr, Mo, N und Cu die folgende Ungleichung erfüllen: $Cr + 3 , 3 \times Mo + 16 \times N + 10 \times Cu \geq 26 , 0 % ,$
wobei die unvermeidbaren Verunreinigungen in der korrosionsbeständigen Schicht umfassen: S ≤ 0,030 % und P ≤ 0,045,
wobei die Grundschicht die folgenden chemischen Elemente in Gew.-% umfasst:
C: 0,01-0,20 %;
Si: 0,10-0,50 %;
Mn: 0,50-2,00 %;
Al: 0,02-0,04 %;
Ti: 0,005-0,014 %;
Nb: 0,005-0,020 %; und $N \leq 0 , 006 % ;$
wobei der Rest aus Fe und unvermeidbaren Verunreinigungen besteht, wobei die unvermeidbaren Verunreinigungen in der Grundschicht Folgendes umfassen: S ≤ 0,010 % und P ≤ 0,015 %,
wobei die Grundschicht optional ferner mindestens eines der folgenden chemischen Elemente umfasst: $0 < B \leq 0 , 0003 % ;$ $0 < Ni \leq 0 , 20 % ;$ $0 < Cr \leq 0 , 22 % ;$ und $0 < Mo \leq 0 , 12 % ,$
wobei eine einlagige korrosionsbeständige Schicht eine Dicke aufweist, die 0,5-50 %, vorzugsweise 2,5-28,6 %, noch bevorzugter 2,5-20 % der Gesamtdicke des Rohrs ausmacht,
wobei das Rohr eine Streckgrenze von ≥ 426 MPa, eine Zugfestigkeit von ≥ 580 MPa, eine Dehnung von ≥ 31 % und eine durchschnittliche Korrosionsrate von ≤ 0,05 mm/Jahr in einer Umgebung aufweist, in der die Temperatur ≤ 40 °C und die Aluminiumsulfatkonzentration ≤ 30 Gew.-% beträgt.

2. Rohr nach Anspruch 1, wobei die korrosionsbeständige Schicht das folgende chemische Element in Gew.-% umfasst:
Cu: 0,01-0,22 %.

3. Rohr nach Anspruch 1, wobei eine einlagige korrosionsbeständige Schicht eine Dicke aufweist, die 0,5-10 % der Gesamtdicke des Rohrs ausmacht, und wobei die Grundschicht die folgenden chemischen Elemente in Gew.-% umfasst:
C: 0,01-0,18 %;
Si: 0,10-0,30 %;
Mn: 0,50-1,50 %;
Al: 0,02-0,03 %;
Ti: 0,005-0,014 %;
Nb: 0,005-0,015 %; und $N \leq 0 , 006 % ;$
der Rest besteht aus Fe und unvermeidbaren Verunreinigungen.

4. Rohr nach Anspruch 1 oder 2, wobei die Grundschicht eine Mikrostruktur aus Ferrit + Perlit oder Ferrit + Perlit + Bainit aufweist; und wobei die korrosionsbeständige Schicht eine Mikrostruktur aus Austenit aufweist.

5. Verfahren zur Herstellung des Rohrs nach einem der Ansprüche 1 bis 4, das die folgenden Schritte umfasst:
(1) Herstellen einer korrosionsbeständigen Schichtplatte und einer Grundschichtplatte;
(2) Zusammenfügen der korrosionsbeständigen Schichtplatte und der Grundschichtplatte, um eine plattierte Platte zu erhalten, wobei eine einlagige korrosionsbeständige Schicht vorzugsweise eine Dicke aufweist, die 0,5-50 %, noch bevorzugter 2,5-20 % der Gesamtdicke der plattierten Platte ausmacht;
(3) Erhitzen und Walzen: Erhitzen der plattierten Platte auf eine Temperatur von 1150 bis 1200 °C und anschließendes Mehrfachwalzen, wobei die Gesamtwalzreduktionsrate nicht weniger als 90 % beträgt und das Endwalzen bei einer Temperatur von nicht weniger als 920 °C durchgeführt wird;
(4) Aufwickeln: Nach der Wasserkühlung wird das Aufwickeln bei einer Temperatur von 500 bis 620 °C durchgeführt, um einen warmgewalzten Coil zu erhalten;
(5) Durchführen einer Oberflächenbehandlung an dem warmgewalzten Coil;
und
(6) Rohrherstellung.

6. Verfahren nach Anspruch 5, wobei in Schritt (3) das Endwalzen bei einer Temperatur von 920 bis 1000 °C durchgeführt wird.

7. Verfahren nach Anspruch 5, wobei das Verfahren ferner einen Vorheizschritt zwischen Schritt (2) und Schritt (3) umfasst, wobei das Vorheizen bei einer Temperatur von 1100 bis 1250 °C durchgeführt wird.

8. Verfahren nach Anspruch 5, wobei das Verfahren ferner das Kaltwalzen und Glühen zwischen Schritt (5) und Schritt (6) umfasst, wobei das Glühen vorzugsweise bei einer Temperatur von 900 bis 1000 °C durchgeführt wird.

## Revendications

1. Tube, dans lequel le tube présente une couche résistante à la corrosion et une couche de base dans une direction d'épaisseur, la couche résistante à la corrosion est située au moins sur une paroi interne du tube, et la couche résistante à la corrosion, en plus du Fe et des impuretés inévitables, comprend en outre les éléments chimiques suivants en % en poids : $0 < C \leq 0 , 08 % ;$
Si : 0,3-0,6 % ;
Mn : 0,5-2,0 % ;
Ni : 11,00-13,00 % ;
Cr : 16,50-18,00 % ;
Mo : 2,00-3,00 % ;
N : 0,02-0,15 % ; et
Cu : 0,01-0,3 %, de préférence Cu : 0,12-0,3 %, de manière davantage préférée Cu : 0,12-0,22 % ;
dans lequel Cr, Mo, N et Cu satisfont à l'inéquation suivante : $Cr + 3 , 3 \times Mo + 16 \times N + 10 \times Cu \geq 26 , 0 % ,$
dans lequel les impuretés inévitables dans la couche résistante à la corrosion comportent : S ≤ 0,030 % et P ≤ 0,045,
dans lequel la couche de base comprend les éléments chimiques suivants en % en poids :
C : 0,01-0,20 % ;
Si : 0,10-0,50 % ;
Mn : 0,50-2,00 % ;
Al : 0,02-0,04 % ;
Ti : 0,005-0,014 % ;
Nb : 0,005-0,020 % ; et $N \leq 0 , 006 % ;$
le reste étant Fe et des impuretés inévitables, dans lequel les impuretés inévitables dans la couche de base comportent : S ≤ 0,010 % et P ≤ 0,015 %,
dans lequel la couche de base comprend en outre optionnellement au moins l'un des éléments chimiques suivants : $0 < B \leq 0 , 0003 % ;$ $0 < Ni \leq 0 , 20 % ;$ $0 < Cr \leq 0 , 22 % ;$ et $0 < Mo \leq 0 , 12 % ,$
dans lequel une couche résistante à la corrosion monocouche présente une épaisseur représentant 0,5-50 %, de préférence 2,5-28,6 %, de manière davantage préférée 2,5-20 %, d'une épaisseur totale du tube,
dans lequel le tube présente une limite d'élasticité ≥ 426 MPa, une résistance à la traction ≥ 580 MPa, un allongement ≥ 31 % et un taux de corrosion moyen ≤ 0,05 mm/an dans un environnement où la température est ≤ 40 °C et la concentration en sulfate d'aluminium est ≤ 30 % en poids.

2. Tube selon la revendication 1, dans lequel la couche résistante à la corrosion comprend l'élément chimique suivant en % en poids :
Cu : 0,01-0,22 %.

3. Tube selon la revendication 1, dans lequel une couche résistante à la corrosion monocouche présente une épaisseur représentant 0,5-10 % d'une épaisseur totale du tube, et
dans lequel la couche de base comprend les éléments chimiques suivants en % en poids :
C : 0,01-0,18 % ;
Si : 0,10-0,30 % ;
Mn : 0,50-1,50 % ;
Al : 0,02-0,03 % ;
Ti : 0,005-0,014 % ;
Nb : 0,005-0,015 % ; et $N \leq 0 , 006 % ;$
le reste étant Fe et des impuretés inévitables.

4. Tube selon la revendication 1 ou 2, dans lequel la couche de base présente une microstructure de ferrite + perlite, ou ferrite + perlite + bainite ; et dans lequel la couche résistante à la corrosion présente une microstructure d'austénite.

5. Procédé pour fabriquer le tube selon l'une des revendications 1 à 4, comportant les étapes suivantes :
(1) la préparation d'une ébauche de couche résistante à la corrosion et d'une ébauche de couche de base ;
(2) l'assemblage de l'ébauche de couche résistante à la corrosion et de l'ébauche de couche de base pour obtenir une ébauche plaquée, dans lequel une couche résistante à la corrosion monocouche présente de préférence une épaisseur représentant 0,5-50 %, de manière davantage préférée 2,5-20 % d'une épaisseur totale de l'ébauche plaquée ;
(3) chauffage et laminage : le chauffage de l'ébauche plaquée à une température de 1150 à 1200 °C, puis la réalisation d'un laminage à plusieurs passages, dans lequel un taux de réduction de laminage total n'est pas inférieur à 90 %, et un laminage final est réalisé à une température non inférieure à 920 °C ;
(4) bobinage : après un refroidissement par eau, la réalisation d'un bobinage à une température de 500 à 620 °C pour obtenir une bobine laminée à chaud ;
(5) la réalisation d'un traitement de surface sur la bobine laminée à chaud ; et
(6) la fabrication du tube.

6. Procédé selon la revendication 5, dans lequel à l'étape (3) le laminage final est réalisé à une température de 920 à 1000 °C.

7. Procédé selon la revendication 5, dans lequel le procédé comporte en outre une étape de préchauffage entre l'étape (2) et l'étape (3), dans lequel le préchauffage est réalisé à une température de 1100 à 1250 °C.

8. Procédé selon la revendication 5, dans lequel le procédé comporte en outre un laminage à froid et un recuit entre l'étape (5) et l'étape (6), dans lequel le recuit est de préférence réalisé à une température de 900 à 1000 °C.
